# EUROPÄISCHE PATENTSCHRIFT

(11) **EP 3 736 930 B1**
(45) Veröffentlichungstag und Bekanntmachung des Hinweises auf die Patenterteilung: **21.07.2021**
(21) Anmeldenummer: 19173421.9
(22) Anmeldetag: 09.05.2019
(51) Int. Cl.: H02G 3/14, H02G 3/18, H01H 9/02, H01H 23/04

(54) **TASTSENSOR MIT MINDESTENS EINER BEDIENWIPPE**
TACTILE SENSOR WITH AT LEAST ONE OPERATING ROCKER BUTTON
CAPTEUR TACTILE DOTÉ D'AU MOINS UN BOUTON DE COMMANDE À BASCULE

(43) Veröffentlichungstag der Anmeldung: 11.11.2020
(73) Patentinhaber: GIRA GIERSIEPEN GmbH & Co. KG, 42477 Radevormwald (DE)
(72) Erfinder: Kurth, Christoph, 42477 Radevormwald (DE); Klein, Yvonne, 42329 Wuppertal (DE); Budweg, Mario, 42499 Hückeswagen (DE)
(74) Vertreter: Angerhausen, Christoph

(56) Entgegenhaltungen:
- US-A1- 2008 173 530
- US-A1- 2017 207 042
- US-B1- 6 963 039

## Beschreibung

Die Erfindung geht aus von einem Tastsensor mit einem Platinenträger für die Aufputz-Montage, einer auf dem Platinenträger angeordneten Platine, auf der mindestens zwei Schaltelemente angeordnet sind, und mit mindestens einer Bedienwippe zur Betätigung der Schaltelemente, wobei der Tastsensor mindestens ein zwischen dem Platinenträger und der Bedienwippe angeordnetes Rückstellelement aufweist, über das die Bedienwippe aus einer Betätigungsposition, in welcher die Bedienwippe mindestens eines der Schaltelemente betätigt, in eine Ruheposition, in welcher die Bedienwippe keines der Schaltelemente betätigt, vorgespannt ist, wobei die Bedienwippe um eine Schwenkachse verschwenkbar gelagert ist, in Bezug auf die die mindestens zwei Schaltelemente gegenüberliegend angeordnet sind. Ein derartiger Tastsensor ist aus der US 2017/207042 A1 bekannt. Ein weiterer Tastsensor ist bekannt aus der DE 10 2013 105 894 B4 bekannt.

Die aus dem Stand der Technik bekannten Tastsensoren haben den Nachteil, dass zur präzisen Positionierung der zwischen der Betätigungsposition und Ruheposition beweglichen Bedienwippe zusätzliche Hilfsmittel wie die mindestens eine Bedienwippe umgebende Rahmen oder zwischen mehreren Bedienwippen des Tastsensors angeordnete Blenden erforderlich sind. Die präzise Positionierung der mindestens einen Blende in Bezug auf die Platine ist auch in haptischer Hinsicht erforderlich, um ein reproduzierbares und damit hochwertig anmutendes Tastgefühl bei der Betätigung des Tastsensors zu erreichen. Die zuvor beschriebenen Hilfsmittel wie die mindestens eine Bedienwippe umgebende Rahmen oder Blenden zwischen benachbarten Bedienwippen schränken jedoch die gestalterischen Möglichkeiten des Tastsensors ein und erlauben insbesondere nicht die Schaffung puristisch anmutender Tastsensoren.

Es ist daher die Aufgabe der Erfindung, einen Tastsensor der eingangs beschriebenen Art derart weiterzuentwickeln, dass er die präzise Positionierung der mindestens einen Bedienwippe in Bezug auf die Platine erlaubt, ohne dabei auf die zuvor beschriebenen Hilfsmittel wie die die Bedienwippen umgebende Rahmen oder die Bedienwippen voneinander trennende Blenden zurückgreifen zu müssen.

Diese Aufgabe wird durch einen Tastsensor mit den Merkmalen des Anspruchs 1 gelöst. Die abhängigen Ansprüche betreffen jeweils vorteilhafte Ausführungsformen der Erfindung.

Demgemäß ist vorgesehen, dass die Bedienwippe an ihrer der Platine zugewandten Seite einen Formschlussadapter aufweist, in dem das Rückstellelement formschlüssig aufgenommen ist, wobei der Formschlussadapter eine erste und eine zweite Begrenzungswand aufweist, die sich unter einem Abstand zueinander und zumindest abschnittsweise senkrecht zu der Schwenkachse sowie parallel zu der Platine und von einer Unterseite der Bedienwippe erstrecken.

Der Erfindung liegt somit die Idee zugrunde, dem Rückstellelement eine Doppelfunktion zu verleihen. Neben seiner grundsätzlichen Funktion, die Bedienwippe im Nachgang zu der Betätigung durch einen Benutzer aus der Betätigungsposition in die Ruheposition zurück zu bewegen, ist es dazu vorgesehen, im Zusammenwirken mit einem Formschlussadapter, der an einer der Platine zugewandten Seite der Bedienwippe angeordnet ist und in welchem das Rückstellelement formschlüssig aufgenommen werden kann, die Bedienwippe in Bezug auf die Platine auszurichten. Vorzugsweise ist das Rückstellelement unverdrehbar in dem Formschlussadapter aufgenommen.

Die Bedienwippe kann sich beispielsweise aus einem Dekorteil sowie einem Unterteil zusammensetzen, die über einen Haftvermittler, beispielsweise eine Klebefolie miteinander verbunden sind. Das Dekorteil kann allein nach ästhetischen Ansprüchen ausgebildet sein und bedarf in technischer Hinsicht keinerlei Einschränkungen zur Erzielung der erfindungsgemäß vorgesehenen präzisen Positionierung der Bedienwippe in Bezug auf die Platine. Diese Funktionalität kann insbesondere von dem Unterteil bereitgestellt sein. Dieses kann beispielsweise ein Kunststoffformteil sein, welches an seiner der Platine zugewandten Seite eine Anformung aufweist, die den Formschlussadapter zur formschlüssigen Aufnahme des Rückstellelements bildet.

Das Rückstellelement kann zumindest in Richtung parallel zu der Schwenkachse in Bezug auf die Bedienwippe unverrückbar in dem Formschlussadapter aufgenommen sein.

Der Tastsensor kann je Bedienwippe zwei identische Rückstellelemente aufweisen, die in Bezug auf die Schwenkachse gegenüberliegend und unter demselben Abstand zu der Schwenkachse angeordnet sind. Insbesondere können die beiden identischen Rückstellelemente in Bezug auf die Schwenkachse spiegelsymmetrisch ausgebildet sein. Die Rückstellelemente können Bestandteil der Wippenaufnahme sein.
Das Rückstellelement kann eine einseitig festgelegte elastische Zunge sein, deren freies Ende in der Betätigungsposition der Bedienwippe gegenüber der Ruheposition der Bedienwippe mechanisch vorgespannt ist. Die einseitig festgelegte elastische Zunge kann beispielsweise aus Metall oder Kunststoff bestehen.
Das freie Ende der Zunge kann in der Ruheposition mit einer Restvorspannung, die geringer als die Vorspannung in der Betätigungsposition jedoch zu dieser gleich gerichtet ist, in den Formschlussadapter hinein gedrückt sein.
Der Tastsensor kann weiterhin eine Wippenaufnahme aufweisen, die zwischen der Platine und der Bedienwippe angeordnet ist. Die Wippenaufnahme kann sowohl die Schwenkachse als auch das Rückstellelement aufweisen. Die Schwenkachse kann einteilig mit der Wippenaufnahme, etwa als ein Spritzgussformteil, ausgebildet sein. Alternativ kann die Schwenkachse als ein separates Bauteil ausgebildet sein, das in die Wippenaufnahme eingesetzt ist, etwa ein Rundstab aus Metall oder Kunststoff. Die Schwenkachse selbst kann entlang ihrer Längsrichtung einteilig ausgebildet sein, oder mehrere Teilachsen aufweisen. Wenn die Schwenkachse mehrere Teilachsen aufweist, sind alle Teilachsen entlang derselben Geraden ausgebildet, wodurch insbesondere bei mehreren Wippen eine präzise Ausrichtung der Bedienwippen zueinander erreicht wird. Die Schwenkachse ist vorzugsweise im Querschnitt senkrecht zur Längsachse rund und besonders bevorzugt kreisförmig ausgebildet. Die Schwenkachse kann mittig zwischen gegenüberliegenden Außenseiten der Wippenaufnahme angeordnet sein und die einzige Lagerstelle darstellen, über die die mindestens eine Wippe an der Wippenaufnahme festgelegt ist. Dadurch wird eine Fehlbedienung des Tastsensors durch eine Mittenbetätigung vermieden. Die Bedienwippen können lösbar mit der Schwenkachse verrastet sein, wodurch das Umrüsten des Tastsensors erleichtert wird. Grundsätzlich kann das Rückstellelement auch unabhängig von der Wippenaufnahme ausgebildet sein. In einem nicht erfindungsgemäßen Ausführungsbeispiel kann das Rückstellelement auch Bestandteil eines Schaltelements auf der Platine sein, etwa ein federvorgespannter Betätigungsvorsprung des Schaltelements. Bei einer Ausführungsform ist die Wippenaufnahme als ein Kunststoffformteil ausgebildet, welches sowohl das mindestens eine Rückstellelement als auch die Schwenkachse aufweist.
Die Schwenkachse kann im Querschnitt senkrecht zu ihrer Erstreckungsrichtung rund sein. Die mindestens eine Bedienwippe kann an ihrer der Wippenaufnahme zugewandten Seite mindestens eine und vorzugweise zwei hinterschnittige Rastaufnahmen aufweisen, über die die Bedienwippe an der Schwenkachse lösbar befestigt ist.
Das Rückstellelement kann in einem Durchbruch durch die Wippenaufnahme angeordnet sein und dabei kann das Rückstellelement vorzugsweise eine einseitig am Rand des Durchbruchs festgelegte elastische Zunge sein, etwa eine elastische Zunge der zuvor beschriebenen Art. Diese kann zumindest in der Betätigungsposition der Bedienwippe mit ihrem freien Ende aus dem Durchbruch heraus ragen.

In einem nicht-erfindungsgemäßen Ausführungsbeispiel können die Bedienwippe und das Rückstellelement einteilig ausgeführt sein, vorzugsweise als ein Kunststoffformteil, etwa ein Spritzgussteil.
Die Bedienwippe kann an zwei Seiten, die jeweils unter einem Abstand senkrecht zu der Schwenkachse gegenüberliegend angeordnet sind, vorzugsweise an zwei Stirnseiten, oder diesen vorgelagert, damit sie von einem Dekorteil der Bedienwippe unsichtbar verdeckt sind, jeweils mindestens einen Lageransatz aufweisen, der an einer Anlagefläche der Wippenaufnahme anliegt. Auf diese Weise kann eine weitere Führung der Bedienwippe in Richtung senkrecht zur Schwenkachse sowie in der Ebene parallel zur Platine erreicht werden. Insbesondere kann der mindestens eine Lageransatz in jeder Schwenkposition der Bedienwippe um die Schwenkachse zwischen der Betätigungsposition und der Ruheposition an der Anlagefläche anliegen, so dass unabhängig von der Schwenkposition der Bedienwippe jeweils die zuvor beschriebene Führung der Bedienwippe erreicht wird. Der jeweilige Lageransatz kann eine Ebene Anlagefläche sein oder aufweisen.
Die Lageransätze können an den gegenüberliegenden Seiten unter einer Vorspannung an ihrer jeweils zugeordneten Anlagefläche anliegen, um eine noch weitere Präzisierung der Führung der Bedienwippe zu erreichen.

Weitere Einzelheiten der Erfindung werden anhand der nachstehenden Figuren erläutert. Dabei zeigt
- Figur 1: in einer Explosionsdarstellung den prinzipiellen Aufbau eines erfindungsgemäßen Tastsensors gemäß einer Ausführungsform der Erfindung;
- Figur 2: in einer Explosionsdarstellung eine beispielhafte Ausführungsform einer Bedienwippe;
- Figur 3: eine Rückansicht der Bedienwippe gemäß Figur 2 in zusammengebauten Zustand;
- Figur 4: eine beispielhafte Ausführungsform einer Wippenaufnahme in perspektivischer Darstellung; und
- Figur 5: eine Querschnittsansicht eines erfindungsgemäßen Tastsensors.

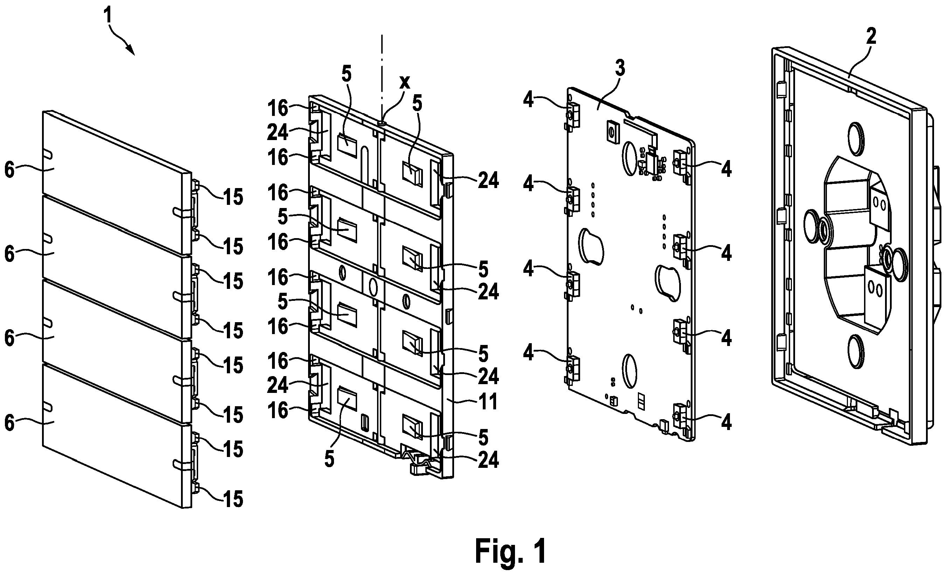

Der in Figur 1 gezeigte Tastsensor 1 weist vier Bedienwippen 6 auf. Alternativ können auch mehr oder weniger Bedienwippen 6 vorgesehen sein. Insbesondere kann es der mechanische Aufbau der Ausführungsform gemäß Figur 1, insbesondere die Symmetrie der Wippenaufnahme 11 erlauben, dass an derselben Wippenaufnahme 11 und damit an dem Tastsensor 1 wahlweise beispielsweise auch nur zwei Bedienwippen 6 oder lediglich eine einzige Bedienwippe 6 montiert wird. Die Bedienwippen 6 weisen an ihren gegenüberliegenden kurzen Stirnseiten je Bedienwippe 6 zwei Lageransätze 15 auf, die an korrespondierenden Anlageflächen 16 an der Innenseite des Außenumfangs der Wippenaufnahme 11 anliegen.

Die Wippenaufnahme 11 weist insbesondere die Schwenkachse x auf, um welche herum die Bedienwippen 6 verschwenkbar sind. Die Bedienwippen 6 können insbesondere auf die Schwenkachse x aufgerastet sein. Die Wippenaufnahme 11 weist weiterhin je Bedienwippe 6 zwei Rückstellelemente 5 auf, die gleichmäßig beabstandet und symmetrisch ausgebildet an gegenüberliegenden Seiten der Schwenkachse angeordnet sind. Die Rückstellelemente 5 sind vorliegend als einseitig an der Wippenaufnahme 11 montierte Zungen ausgebildet, die unter mechanischer Vorspannung bei der Betätigung der Bedienwippe 6 aus der Ruheposition in eine Betätigungsposition in einen jeweiligen Durchbruch in der Wippenaufnahme 11, in welchem die Zunge montiert ist, hinein verlagert wird.

Die Platine 3 ist in einem Platinenträger 2 aufgenommen und wird durch den Platinenträger 2 in Bezug auf die Wippenaufnahme 11 präzise vorpositioniert, wenn die Platine 3 in den Platinenträger 2 eingelegt und die Wippenaufnahme 11 auf dem Platinenträger 2 verrastet ist, so dass die Platine 3 zwischen dem Platinenträger 2 und der Wippenaufnahme 11 angeordnet ist. Über weitere Durchbrüche der Wippenaufnahme 11 sind die auf der Platine 3 angeordneten Schaltelemente 4 für die Betätigung durch die Bedienwippen 6 erreichbar.

Bei der Aufrastung der Bedienwippen 6 auf der Wippenaufnahme 11 wird eine präzise Ausrichtung der Bedienwippen 6 in Bezug auf die Wippenaufnahme 11 in allen drei Raumrichtungen erreicht, und zwar unabhängig von einer Schwenklage der Bedienwippe 6 zwischen der Betätigungsposition, in welcher die Bedienwippe 6 das Schaltelement 4 betätigt und einer Ruheposition, in welcher die Bedienwippe 6 das Schaltelement 4 freigibt.

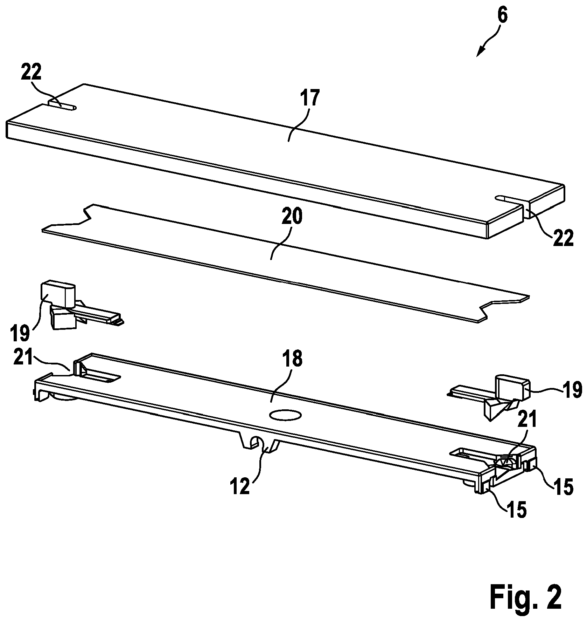

In Figur 2 ist eine beispielhafte Ausführungsform einer Bedienwippe 6 gezeigt, wie sie beispielsweise auch bei der Ausführungsform gemäß Figur 1 Verwendung finden könnte. Die Bedienwippe 6 besteht aus einem Dekorteil 17, welches beispielsweise ein Glas- oder Metallteil sein kann. Die für die Realisierung der Erfindung technisch erforderlichen Mittel werden sämtlich über das Unterteil 18 der Bedienwippe 6 bereitgestellt, so dass hinsichtlich des Dekorteils 17 keinerlei gestalterische Einschränkungen bestehen. Insbesondere kann das Dekorteil 17 Abmessungen aufweisen, mit welchen es zumindest das Unterteil vollständig überragt, so dass, wie es beispielsweise in der Zusammenschau mit Figur 1 zu erkennen ist, in der Draufsicht auf die Bedienwippe 6 lediglich das Dekorteil 17 zu erkennen ist. Ebenso können die Platine 3 und die Wippenaufnahme 11 vollständig in dem Platinenträger 2 aufgenommen werden, während der Außenumfang der Bedienwippen 6 mit dem Außenumfang des Platinenträgers 2 fluchtet, so dass ein minimalistisches Design erreicht wird. Die Verwendung von die Bedienwippen 6 umgebenden Rahmen oder Blenden zwischen benachbarten Bedienwippen ist nicht erforderlich, um die Bedienwippen in Bezug auf den Platinenträger 2 und die Platine 3 präzise zu positionieren und zu halten.

Wie in Figur 2 zu erkennen ist, ist das Dekorteil 17 über einen Haftvermittler 20, beispielsweise eine Klebefolie auf dem Unterteil 18 fixiert. Das Unterteil 18 weist an seiner dem Dekorteil 17 zugewandten Seite eine Aufnahme 21 auf, in welcher ein Lichtleiter 19 aufgenommen ist. Insbesondere weist das Unterteil 18 an seinen gegenüberliegenden Längsenden jeweils eine Aufnahme 21 zur Aufnahme eines Lichtleiters 19 auf. Die Rastaufnahme 12 ist mittig zwischen den beiden Stirnseiten des Unterteils 18 an der dem Dekorteil 17 abgewandten Seite des Unterteils 18 einteilig angeformt. Die Rastaufnahme 12 ist hinterschnittig ausgebildet.

An den gegenüberliegenden Stirnseiten weist das Unterteil 18 jeweils ein paar Lageransätze 15 auf, welche, wie bereits mit Bezug auf Figur 1 beschrieben wurde, an korrespondierenden Anlageflächen 16 (siehe Figur 1) zur Anlage kommen, so dass eine präzise Positionierung der Bedienwippe 6 in Längsrichtung der Bedienwippe 6 auch unabhängig von einer Verkippung der Bedienwippe 6 in Bezug auf die Wippenaufnahme 11 erreicht wird.

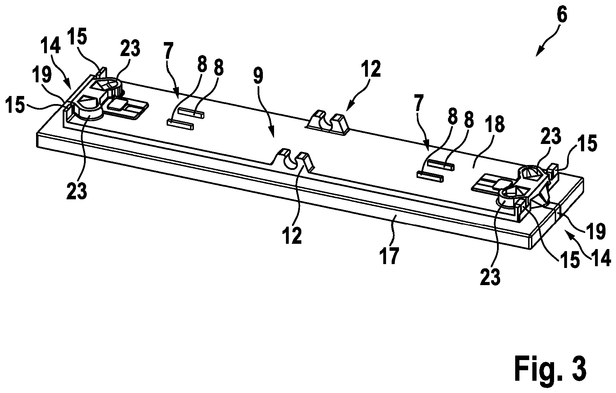

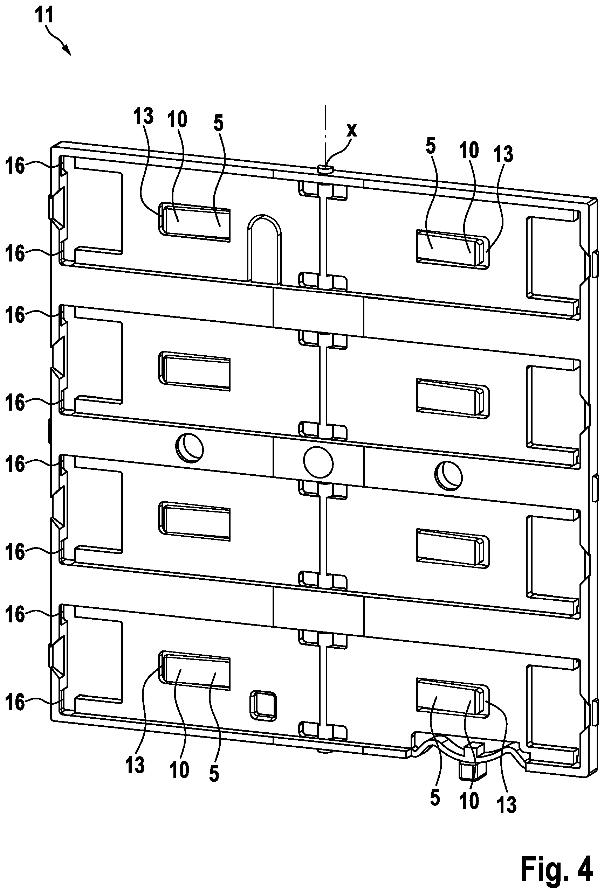

Die Figur 3 zeigt die Bedienwippe 6 von der Rückseite, das heißt mit Blick auf die Unterseite 9 der Bedienwippe 6. An der Unterseite 9 ist zu beiden Seiten der Rastaufnahmen 12 ein Formschlussadapter 7 ausgebildet. Der Formschlussadapter 7 besteht aus einer ersten und einer zweiten Begrenzungswand 8, die mit einem Abstand zueinander und sich senkrecht zu der Schwenkachse x erstreckend ausgebildet sind. Insbesondere erstrecken sich die Begrenzungswände 8 zumindest in der Ruheposition der Bedienwippe 6 parallel zu der Platine des Tastsensors 1. Im Übrigen erstrecken sich die Begrenzungswände 8 senkrecht zu der Unterseite 9. Ein Abstand der Begrenzungswände 8 kann gerade eine Abmessung des Rückstellelements 5 entsprechen, beispielsweise der Breite des als Zunge ausgebildeten Rückstellelements 5 der Ausführungsform gemäß Figur 4. Wenn das Rückstellelement 5 formschlüssig zwischen den beiden Begrenzungswänden 8 des Formschlussadapters 7 aufgenommen ist, ist die Bedienwippe 6 in Richtung parallel zur Schwenkachse x arretiert. Da der Formschlussadapter 7 in Richtung senkrecht zu den Begrenzungswänden 8 keine die Bewegung der Bedienwippe 6, insbesondere die Bewegung des Rückstellelements 5 limitierenden Geometrien aufweist, kann das Rückstellelement 5 beim Verkippen der Bedienwippe 6 zwischen der Betätigungsposition und der Ruheposition, wobei sich die Geometrie des Rückstellelements 5 verändern kann, hin- und hergleiten.

Das Rückstellelement 5 kann beispielsweise eine Zungenform aufweisen, wie sie mit Bezug auf Figur 4 dargestellt ist. In Verbindung mit dem Formschlussadapter gemäß Figur 3 taucht das freie Ende 10 der Zunge abhängig von der Lage der Bedienwippe 6 zwischen der Betätigungsposition und der Ruheposition unterschiedlich weit in den Formschlussadapter 7 ein und verlagert sich dabei gegebenenfallsgeringfügig auch in Längsrichtung der Begrenzungswände 8.

Wie bereits mit Bezug auf Figur 2 beschrieben wurde, weist die in den Figuren 2 und 3 gezeigte Ausführungsform der Bedienwippe 6 jeweils einen Lichtleiter 19 an den gegenüberliegenden Stirnseiten der Bedienwippe 6 auf. An der der Platine 3 zugewandten Unterseite 9 des Unterteils 18 weist die Bedienwippe 6 je Lichtleiter 19 zwei separate Lichtmischkammern 23 auf, über welche das Licht unterschiedlicher Lichtquellen in den jeweiligen Lichtleiter 19 eingekoppelt werden kann. Die beiden Lichtquellen können beispielsweise eine RGB-LED und eine Weißlicht-LED sein. Im Falle der RGB-LED hat die Lichtmischkammer 23 insbesondere die Funktion, eine Durchmischung der drei Einzelspektren der RGB-LED zu bewirken, so dass ein homogenes Emissionsspektrum des über das Dekorstück 17 ausgekoppelten Lichts erreicht wird.

Die Figur 4 zeigt eine beispielhafte Ausführungsform einer Wippenaufnahme 11. Diese kann beispielsweise als ein Kunststoffformteil einteilig ausgebildet sein. Die Schwenkachse x erstreckt sich mittig zwischen und parallel zu einem ersten Paar paralleler Außenseiten der Wippenaufnahme 11 und verbindet das weitere Paar gegenüberliegender Außenseiten der Wippenaufnahme 11 senkrecht miteinander. Je Bedienwippe 6 sind zwei identische Rückstellelemente 5 vorgesehen, die vorliegend als elastische Zungen ausgebildet sind. Diese sind in Bezug auf die Schwenkachse x gegenüberliegend und unter demselben Abstand zu der Schwenkachse x angeordnet. Darüber hinaus sind die Rückstellelemente 5 in Bezug auf die Schwenkachse x spiegelsymmetrisch ausgebildet. Dazu weist die Wippenaufnahme 11 zwei Durchbrüche auf, in denen jeweils eine elastische Zunge einseitig festgelegt ist, wobei sich die freien Enden der elastischen Zungen voneinander weg erstrecken.

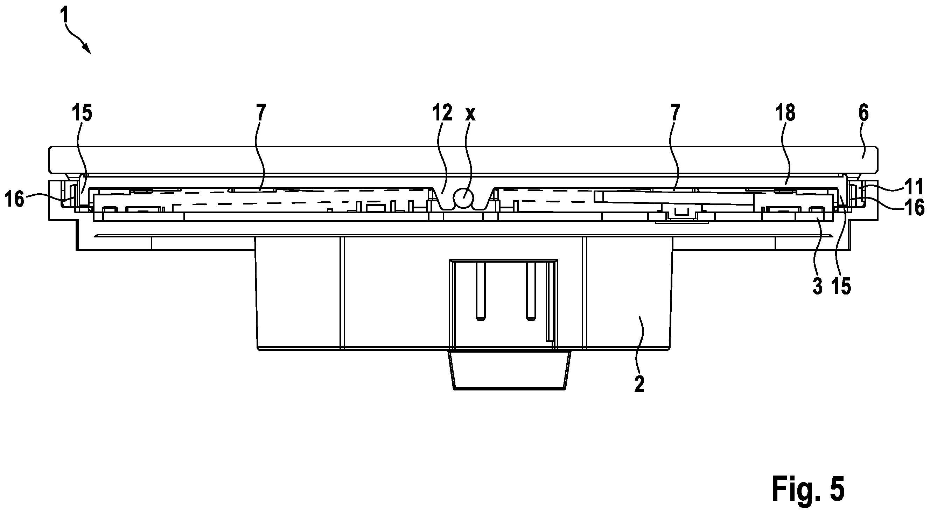

Die Querschnittsansicht gemäß Figur 5 zeigt einerseits, dass die Bedienwippe 6 zumindest in der gezeigten Querschnittsebene über die gesamte Breite des Tastsensors 1 verläuft, so dass in der Sicht senkrecht auf die Bedienwippe 6 keine weiteren Bauelemente des Tastsensors 1 zu erkennen sind. Dies ermöglicht das bereits angesprochene minimalistische Design des erfindungsgemäßen Tastsensors 1 trotz seiner durch die erfindungsgemäße Lösung erreichten präzisen Ausrichtung der Bedienwippen 6 in Bezug auf die weiteren Bauteile des Tastsensors 1, insbesondere die Platine 3.
Die Bedienwippen 6 ist über ihr Unterteil 18 auf der Schwenkachse x der Wippenaufnahme 11 verrastet, wozu das Unterteil 18 an seiner der Platine 3 zugewandten Seite eine hinterschnittige Rastaufnahme 12 aufweist. Bereits durch die Verrastung der Bedienwippe 6 auf der Schwenkachse x ist die Bedienwippe 6 in den beiden Dimensionen der Zeichnungsebene arretiert. Um eine präzise Halterung der Bedienwippe 6 auch in Richtung der Schwenkachse x, das heißt senkrecht zur Zeichnungsebene zu erreichen, sind an der der Platine 3 zugewandten Unterseite des Unterteils 18 je Bedienwippe 6 zwei Formschlussadapter 7 ausgebildet, in welche jeweils ein Rückstellelement (nicht erkennbar) eingreift. Über die Lageransätze 15 an den gegenüberliegenden Stirnseiten der Bedienwippe 6, die an jeweils einer Anlagefläche 16 anliegen, wird unabhängig von einer Stellposition der Bedienwippe 6 zwischen der Betätigungsposition und der Ruheposition eine zusätzliche Arretierung der gegenüberliegenden Enden der Wippe 6 in Bezug auf die Wippenaufnahme 11 erreicht und damit die Halterung und Führung der Bedienwippe 6 an dem Tastsensor 1 und insbesondere an der Wippenaufnahme 11.
Bei der Verwendung mehrerer Bedienwippen 6, wie dies beispielsweise in Figur 1 gezeigt ist, wird durch die gezeigten technische Mittel auch eine präzise Ausrichtung der Wippen untereinander ermöglicht.

### Bezugszeichenliste

- 1: Tastsensor
- 2: Platinenträger
- 3: Platine
- 4: Schaltelement
- 5: Rückstellelement
- 6: Bedienwippe
- 7: Formschlussadapter
- 8: Begrenzungswand
- 9: Unterseite
- 10: freies Ende
- 11: Wippenaufnahme
- 12: Rastaufnahme
- 13: Durchbruch
- 14: Seite
- 15: Lageransatz
- 16: Anlagefläche
- 17: Dekorteil
- 18: Unterteil
- 19: Lichtleiter
- 20: Haftvermittler
- 21: Aufnahme
- 22: Ausnehmung
- 23: Lichtmischkammer
- 24: weiterer Durchbruch
- x: Schwenkachse

## Patentansprüche

1. Tastsensor (1) mit einem Platinenträger (2) für die Aufputz-Montage, einer auf dem Platinenträger (2) angeordneten Platine (3), auf der mindestens zwei Schaltelemente (4) angeordnet sind, und mit mindestens einer Bedienwippe (6) zur Betätigung der Schaltelemente (4), wobei der Tastsensor (1) mindestens ein zwischen dem Platinenträger (2) und der Bedienwippe (6) angeordnetes Rückstellelement (5) aufweist, über das die Bedienwippe (6) aus einer Betätigungsposition, in welcher die Bedienwippe (6) mindestens eines der Schaltelemente (4) betätigt, in eine Ruheposition, in welcher die Bedienwippe (6) keines der Schaltelemente (4) betätigt, vorgespannt ist, wobei die Bedienwippe (6) um eine Schwenkachse (x) verschwenkbar gelagert ist, in Bezug auf die die mindestens zwei Schaltelemente (4) gegenüberliegend angeordnet sind,
**dadurch gekennzeichnet, dass**
die Bedienwippe (6) an ihrer der Platine (3) zugewandten Seite einen Formschlussadapter (7) aufweist, in dem das Rückstellelement (5) formschlüssig aufgenommen ist, und wobei der Formschlussadapter (7) eine erste und eine zweite Begrenzungswand (8) aufweist, die sich unter einem Abstand zueinander und zumindest abschnittsweise senkrecht zu der Schwenkachse (x) sowie parallel zu der Platine (3) und von einer Unterseite (9) der Bedienwippe (6) erstrecken.

2. Tastsensor (1) nach Anspruch 1, bei dem das Rückstellelement (5) zumindest in Richtung parallel zu der Schwenkachse (x) unverrückbar in dem Formschlussadapter (7) aufgenommen ist.

3. Tastsensor (1) nach einem der vorangegangenen Ansprüche, der je Bedienwippe (6) zwei identische Rückstellelemente (5) aufweist, die in Bezug auf die Schwenkachse (x) gegenüberliegend und unter demselben Abstand zu der Schwenkachse (x) angeordnet sind.

4. Tastsensor (1) nach Anspruch 3, bei dem die beiden identischen Rückstellelemente (5) in Bezug auf die Schwenkachse (x) spiegelsymmetrisch ausgebildet sind.

5. Tastsensor (1) nach einem der vorangegangenen Ansprüche, bei dem das Rückstellelement (5) eine einseitig festgelegte elastische Zunge ist, deren freies Ende (10) in der Betätigungsposition der Bedienwippe (6) gegenüber der Ruheposition der Bedienwippe (6) mechanisch vorgespannt ist.

6. Tastsensor (1) nach Anspruch 5, bei dem das freie Ende (10) in der Ruheposition mit einer Restvorspannung, die geringer als die Vorspannung in der Betätigungsposition jedoch zu dieser gleichgerichtet ist, in den Formschlussadapter (7) hinein gedrückt ist.

7. Tastsensor (1) nach einem der vorangegangenen Ansprüche, der eine Wippenaufnahme (11) aufweist, die zwischen der Platine (3) und der Bedienwippe (6) angeordnet ist und die sowohl die Schwenkachse (x) als auch das Rückstellelement (5) aufweist.

8. Tastsensor (1) nach Anspruch 7, bei dem die Schwenkachse (x) im Querschnitt senkrecht zu ihrer Erstreckungsrichtung rund ist und die Bedienwippe (6) an ihrer der Wippenaufnahme (11) zugewandten Seite mindestens eine und vorzugsweise zwei hinterschnittige Rastaufnahmen (12) aufweist, über die die Bedienwippe (6) an der Schwenkachse (x) lösbar befestigt ist.

9. Tastsensor (1) nach Anspruch 7 oder 8, bei dem das Rückstellelement (5) in einem Durchbruch (13) durch die Wippenaufnahme (11) angeordnet ist, wobei das Rückstellelement (5) vorzugsweise eine einseitig am Rand des Durchbruchs (13) festgelegte elastische Zunge ist, die zumindest in der Betätigungsposition der Bedienwippe (6) mit ihrem freien Ende (10) aus dem Durchbruch (13) heraus ragt.

10. Tastsensor (1) nach Anspruch 7, bei dem die Wippenaufnahme (11) und das Rückstellelement (5) einteilig ausgeführt sind, vorzugsweise als ein Kunststoffformteil.

11. Tastsensor (1) nach einem der Ansprüche 7 bis 10, bei dem die Bedienwippe (6) an zwei Seiten (14), die jeweils unter einem Abstand senkrecht zur Schwenkachse (x) gegenüber liegend angeordnet sind, jeweils mindestens einen Lageransatz (15) aufweist, der an einer Anlagefläche (16) der Wippenaufnahme (11) anliegt.

12. Tastsensor (1) nach Anspruch 11, bei dem der mindestens eine Lageransatz (15) in jeder Schwenkposition der Bedienwippe (6) um die Schwenkachse (x) zwischen der Betätigungsposition und der Ruheposition an der Anlagefläche (16) anliegt.

13. Tastsensor (1) nach Anspruch 11 oder 12, bei dem die Lageransätze (15) an den gegenüber liegenden Seiten (14) unter einer Vorspannung an ihrer jeweils zugeordneten Anlagefläche (16) anliegen.

14. Tastsensor (1) nach einem der vorangegangenen Ansprüche, bei dem die Schwenkachse mindestens eine der folgenden Eigenschaften aufweist:
a. die Schwenkachse ist einteilig mit der Wippenaufnahme oder als ein separates Bauteil, vorzugsweise als ein Rundstab aus Metall oder Kunststoff, ausgebildet, das in die Wippenaufnahme eingesetzt ist;
b. die Schwenkachse ist entlang ihrer Längsachse einteilig ausgebildet oder sie weist mehrere Teilachsen auf, wobei alle Teilachsen entlang derselben Geraden ausgebildet sind, so dass bei mehreren Wippen eine präzise Ausrichtung der Bedienwippen zueinander erreicht wird;
c. die Schwenkachse ist im Querschnitt senkrecht zur Längsachse rund und besonders bevorzugt kreisförmig ausgebildet;
d. die Schwenkachse ist mittig zwischen gegenüberliegenden Außenseiten der Wippenaufnahme angeordnet und sie ist die einzige Lagerstelle, über die die mindestens eine Wippe an der Wippenaufnahme festgelegt ist, so dass eine Fehlbedienung des Tastsensors durch eine Mittenbetätigung vermieden wird.

## Claims

1. A touch sensor (1) with a board carrier (2) for surface mounting, a printed circuit board (3) arranged on the board carrier (2), on which at least two switching elements (4) are arranged, and with at least one rocker switch (6) for actuating the switching elements (4), the touch sensor (1) having at least one reset element (5) which is arranged between the board carrier (2) and the rocker switch (6) and by means of which the rocker switch (6) is biased out of an actuating position, in which the rocker switch (6) actuates at least one of the switching elements (4), into a rest position, in which the rocker switch (6) does not actuate any of the switching elements (4), the rocker switch (6) being mounted such that it can be pivoted about a swivel axis (x) with respect to which the at least two switching elements (4) are arranged opposite one another, **characterized in that** the rocker switch (6) has a form-fit adapter (7) on its side facing the board (3), in which the reset element (5) is received in a form-fitting manner, and the form-fit adapter (7) having a first and a second boundary wall (8) which extend at a distance from one another and at least in sections perpendicularly to the swivel axis (x) and parallel to the printed circuit board (3) and from an underside (9) of the rocker switch (6).

2. The touch sensor (1) according to claim 1, in which the reset element (5) is accommodated in the form-fit adapter (7) in an immovable manner at least in the direction parallel to the swivel axis (x).

3. The touch sensor (1) according to one of the preceding claims, which has two identical reset elements (5) per rocker switch (6), which are arranged opposite one another with respect to the swivel axis (x) and at the same distance from the swivel axis (x).

4. The touch sensor (1) according to claim 3, in which the two identical reset elements (5) are formed mirror-symmetrically with respect to the swivel axis (x).

5. The touch sensor (1) according to one of the preceding claims, in which the reset element (5) is a unilaterally fixed elastic tongue, the free end (10) of which is mechanically prestressed in the actuating position of the rocker switch (6) with respect to the rest position of the rocker switch (6).

6. The touch sensor (1) according to claim 5, in which the free end (10) is pressed into the form-fit adapter (7) in the rest position with a residual prestress which is less than the prestress in the actuating position but in the same direction as the latter.

7. The touch sensor (1) according to one of the preceding claims, which has a rocker receptacle (11) which is arranged between the circuit board (3) and the rocker switch (6) and which has both the swivel axis (x) and the reset element (5).

8. The touch sensor (1) according to claim 7, in which the swivel axis (x) is round in cross section perpendicular to its direction of extension and the rocker switch (6) has at least one, and preferably two, undercut latching receptacles (12) on its side facing the rocker receptacle (11), by means of which the rocker switch (6) is detachably fastened to the swivel axis (x).

9. The touch sensor (1) according to Claim 7 or 8, in which the reset element (5) is arranged in an opening (13) through the rocker receptacle (11), the reset element (5) preferably being an elastic tongue which is fixed on one side on the edge of the opening (13) and projects with its free end (10) out of the opening (13) at least in the actuating position of the rocker switch (6).

10. The touch sensor (1) according to claim 7, in which the rocker receptacle (11) and the reset element (5) are designed in one piece, preferably as a moulded plastic part.

11. The touch sensor (1) according to one of the claims 7 to 10, in which the rocker switch (6) has at least one bearing projection (15) on each of two sides (14), which are in each case arranged opposite one another at a distance perpendicular to the swivel axis (x), which bearing projection bears against a bearing surface (16) of the rocker receptacle (11).

12. The touch sensor (1) according to claim 11, in which the at least one bearing projection (15) bears against the bearing surface (16) in each pivoting position of the rocker switch (6) about the swivel axis (x) between the actuating position and the rest position.

13. The touch sensor (1) according to claim 11 or 12, in which the bearing projections (15) on the opposite sides (14) bear against their respective associated bearing surface (16) under a pretension.

14. The touch sensor (1) according to any one of the preceding claims, in which the swivel axis has at least one of the following properties:
a. the swivel axis is formed integrally with the rocker receptacle or as a separate component, preferably as a round rod made of metal or plastic, which is inserted into the rocker receptacle;
b. the swivel axis is formed in one piece along its longitudinal axis or it has several partial axes, all partial axes being formed along the same straight line, so that precise alignment of the rocker switchs with respect to one another is achieved in the case of several rockers;
c. the swivel axis is circular in cross-section perpendicular to the longitudinal axis and is particularly preferably circular;
d. the swivel axis is arranged centrally between opposite outer sides of the rocker receptacle and it is the only bearing point via which the at least one rocker is fixed to the rocker receptacle, so that incorrect operation of the touch sensor by means of a central actuation is avoided.

## Revendications

1. Capteur tactile (1) avec un support de platine (2) pour le montage en saillie, une platine (3), disposée sur le support de platine (2), sur laquelle sont disposés au moins deux éléments de commutation (4), et avec au moins une bascule de commande (6) pour l'actionnement des éléments de commutation (4), dans lequel le capteur tactile (1) comprend au moins un élément de rappel (5), disposé entre le support de platine (2) et la bascule de commande (6), par l'intermédiaire duquel la bascule de commande (6) est précontrainte d'une position d'actionnement, dans laquelle la bascule de commande (6) actionne au moins un des éléments de commutation (4), vers une position de repos, dans laquelle la bascule de commande (6) n'actionne aucun des éléments de commutation (4), dans lequel la bascule de commande (6) est logée de manière pivotante autour d'un axe de pivotement (x) par rapport auquel les au moins deux éléments de commutation (4) sont disposés en face les uns des autres,
**caractérisé en ce que** la bascule de commande (6) comprend, sur son côté orienté vers la platine (3), un adaptateur à complémentarité de forme (7) dans lequel l'élément de rappel (5) est logé par complémentarité de forme et dans lequel l'adaptateur de complémentarité de forme (7) comprend une première et une deuxième parois de délimitation (8) qui s'étendent à une certaine distance entre elles et, au moins à certains endroits, perpendiculairement à l'axe de pivotement (x) ainsi que parallèlement à la platine (3) et à partir d'un côté inférieur (9) de la bascule de commande (6).

2. Capteur tactile (1) selon la revendication 1, dans lequel l'élément de rappel (5) est logé de manière immobile, au moins dans la direction parallèle à l'axe de pivotement (x), dans l'adaptateur de complémentarité de forme (7).

3. Capteur tactile (1) selon l'une des revendications précédentes, qui comprend, à chaque bascule de commande (6), deux éléments de rappel (5) identiques, qui sont disposés de manière opposée par rapport à l'axe de pivotement (x) et à la même distance de l'axe de pivotement (x).

4. Capteur tactile (1) selon la revendication 3, dans lequel les deux éléments de rappel (5) identiques sont réalisés de manière symétrique en miroir par rapport à l'axe de pivotement (x).

5. Capteur tactile (1) selon l'une des revendications précédentes, dans lequel l'élément de rappel (5) est une languette élastique maintenue d'un côté, dont l'extrémité libre (10) est précontrainte mécaniquement dans la position d'actionnement de la bascule de commande (6) en face la position de repos de la bascule de commande (6).

6. Capteur tactile (1) selon la revendication 5, dans lequel l'extrémité libre (10) est comprimée, avec une précontrainte résiduelle, qui est plus faible que la précontrainte dans la position d'actionnement mais orientée dans la même direction, à l'intérieur de l'adaptateur de complémentarité de forme (7).

7. Capteur tactile (1) selon l'une des revendications précédentes, qui comprend un logement de bascule (11) disposé entre la platine (3) et la bascule de commande (6) et qui comprend aussi bien l'axe de pivotement (x) que l'élément de rappel (5).

8. Capteur tactile (1) selon la revendication 7, dans lequel l'axe de pivotement (x) présente une section transversale perpendiculairement à sa direction d'extension de forme ronde et la bascule de commande (6) comprend, sur son côté orienté vers le logement de bascule (11), au moins une et de préférence deux logements d'encliquetage à contre-dépouilles (12) par l'intermédiaire desquels la bascule de commande (6) est fixée de manière amovible à l'axe de pivotement (x).

9. Capteur tactile (1) selon la revendication 7 ou 8, dans lequel l'élément de rappel (5) est disposé dans une percée (13) à travers le logement de bascule (11), dans lequel l'élément de rappel (5) est de préférence une languette élastique fixée d'un côté au bord de la percée (13), qui, au moins dans la position d'actionnement de la bascule de commande (6), dépasse, avec son extrémité libre (10), hors de la percée (13).

10. Capteur tactile (1) selon la revendication 7, dans lequel le logement de bascule (11) et l'élément de rappel (5) sont réalisés d'une seule pièce, de préférence sous la forme d'une pièce moulée en matière plastique.

11. Capteur tactile (1) selon l'une des revendications 7 à 10, dans lequel la bascule de commande (6) comprend, sur deux côtés (14), qui sont chacun disposés de manière opposée à une certaine distance perpendiculairement à l'axe de pivotement (x), au moins un épaulement de palier (15) qui s'appuie contre une surface d'appui (16) du logement de bascule (11).

12. Capteur tactile (1) selon la revendication 11, dans lequel l'au moins un épaulement de palier (15) s'appuie, à chaque position de pivotement de la bascule de commande (6) autour de l'axe de pivotement (x) entre la position d'actionnement et la position de repos, contre la surface d'appui (16).

13. Capteur tactile (1) selon la revendication 11 ou 12, dans lequel les épaulements de palier (15) s'appuient, au niveau des côtés opposés (14), sous l'action d'une précontrainte, contre leur surface d'appui (16) correspondante.

14. Capteur tactile (1) selon l'une des revendications précédentes, dans lequel l'axe de pivotement présente au moins une des propriétés suivantes :
a. l'axe de pivotement est réalisé d'une seule pièce avec le logement de bascule ou comme un composant séparé, de préférence sous la forme d'une tige ronde en métal ou en matière plastique, qui est insérée dans le logement de bascule ;
b. l'axe de pivotement est réalisé d'une seule pièce le long de son axe longitudinal ou elle comprend plusieurs axes partiels, dans lequel tous les axes partiels sont réalisés le long de la même droite, de façon à obtenir, dans le cas de plusieurs bascules, un alignement précis des bascules de commande entre elles ;
c. l'axe de pivotement présente une section transversale perpendiculaire à l'axe longitudinal de forme ronde et présente de préférence une forme circulaire ;
d. l'axe de pivotement est disposé au centre entre les côtés externes opposés du logement de bascule et il constitue le seul point d'appui par l'intermédiaire duquel l'au moins une bascule est fixée au logement de bascule, de façon à éviter une commande erronée du capteur tactile par un actionnement au centre.
